# EUROPÄISCHE PATENTSCHRIFT

(11) **EP 1 301 381 B1**
(45) Veröffentlichungstag und Bekanntmachung des Hinweises auf die Patenterteilung: **03.09.2008**
(21) Anmeldenummer: 01978254.9
(22) Anmeldetag: 19.07.2001
(51) Int. Cl.: B60S 1/04

(54) **WISCHANLAGE FÜR EINE SCHEIBE EINES KRAFTFAHRZEUGS**
WIPER ARRANGEMENT FOR THE WINDSCREEN OF A MOTOR VEHICLE
SYSTEME D'ESSUIE-GLACE POUR UNE VITRE DE VEHICULE AUTOMOBILE

(30) Priorität: 21.07.2000 DE 10035476
(43) Veröffentlichungstag der Anmeldung: 16.04.2003
(73) Patentinhaber: Valeo Wischersysteme GmbH, 74321 Bietigheim-Bissingen (DE)
(72) Erfinder: EGNER-WALTER, Bruno, 74076 Heilbronn (DE); SCHMID, Eckhardt, 74336 Brackenheim (DE)
(74) Vertreter: Jahn, Wolf-Diethart
(86) Internationale Anmeldenummer: PCT/EP2001/008366
(87) Internationale Veröffentlichungsnummer: WO 2002/008031

(56) Entgegenhaltungen:
- DE-A- 19 809 630
- DE-A- 19 833 404
- FR-A- 2 770 880

## Beschreibung

Die vorliegende Erfindung betrifft eine Wischanlage für eine Scheibe eines Kraftfahrzeugs mit mindestens drei voneinander beabstandeten Befestigungsgliedern, von denen zwei auf einer Verbindungslinie liegen und das dritte von der Verbindungslinie beabstandet ist, welche verschraubungsfrei in entsprechende Aufnahmeeinrichtungen am Kraftfahrzeug eingreifen können.

Eine Wischanlage dieser Art ist aus der DE 198 33 404 A1 bekannt. Die dort offenbarte Scheibenwischanlage umfasst eine stangenartige Tragkonstruktion, an der insgesamt drei als zylindrische Steckzapfen ausgebildete Befestigungsglieder vorgesehen sind. Diese Befestigungsglieder sind also anlagenseitig vorgesehen. Sie werden in Aufnahmeöffnungen axial eingesteckt, die in speziellen Halteteilen angeordnet sind, die am Fahrzeugkörper befestigt, also fahrzeugseitig vorgesehen sind. Zur schwingungsmäßigen Abkopplung der Scheibenwischanlage vom Fahrzeugkörper sind die fahrzeugseitigen Aufnahmeöffnungen mit Tüllen aus Gummi versehen, die in entsprechende Durchbrüche in den Halteteilen eingeknüpft sind. Steckzapfen, Aufnahmeöffnungen und Gummitüllen bilden zusammen die Befestigungsvorrichtung für die Scheibenwischanlage.

Mit dieser Wischanlage ist eine verschraubungsfreie und daher sehr leichte und einfache Montage der Wischanlage am Kraftfahrzeug möglich. Es hat sich jedoch herausgestellt, dass es unter bestimmten Umständen, z.B. dann, wenn die Wischblätter der Wischanlage durch Schnee blockiert sind bzw. deren Bewegung erschwert ist, zu Lockerungserscheinungen der Wischanlage gegenüber dem Fahrzeug kommen kann.

Die vorliegende Erfindung hat daher die Aufgabe, eine Wischanlage der eingangs genannten Art bereitzustellen, bei der unter allen Betriebsbedingungen ein sicherer Halt der Wischanlage gegenüber dem Kraftfahrzeug gewährleistet ist.

Diese Aufgabe wird bei einer Wischanlage gemäß dem Oberbegriff des Anspruchs 1 dadurch gelöst, dass bei am Kraftfahrzeug motiertem Zustand der wischanlage mindestens ein Steckzapfen im Wesentlichen parallel zur Scheibenquererstreckung ausgerichtet ist.

Unter dem Begriff "Scheibenquererstreckung" wird vorliegend eine Richtung verstanden, welche von einer Seite zur anderen einer Scheibe verläuft, in Fahrzeugrichtung gesehen also von links nach rechts bzw. von rechts nach links. Bei der bekannten Wischanlage sind zwei der drei Steckzapfen parallel zur Scheibenlängserstreckung ausgerichtet, wohingegen ein Steckzapfen senkrecht zur Scheibenebene ausgerichtet ist. Erfindungsgemäß wurde erkannt, dass die insbesondere bei z.B. durch Schnee blockiertem oder in seiner Bewegung behindertem Scheibenwischer auftretenden Momente durch eine solche Ausrichtung der Steckzapfen nicht ausreichend aufgenommen werden können. Im Zusammenspiel mit der zyklischen Belastung durch die Scheibenwischerblätter kann es bei der bekannten Vorrichtung mit der Frequenz der Scheibenwischerbewegung zu einem "Freirütteln" der Scheibenwischanlage vom Kraftfahrzeug kommen. Die erfindungsgemäße Maßnahme ist nun überraschend einfach und wirkungsvoll: Erfindungsgemäß wurde nämlich erkannt, dass dieses "Freirütteln" unterbleibt, wenn der mindestens ein Steckzapfen im Wesentlichen parallel zur Scheibenquererstreckung ausgerichtet ist.

Durch diese erfindungsgemäße und äußerst einfache Maßnahme wird somit eine steckbare, also schraubenfrei montierbare Wischanlage geschaffen, welche im Betrieb sicher verankert bleibt.

Besonders bevorzugt ist dabei, wenn die Ausrichtung mindestens eines Steckzapfens sich von der Ausrichtung mindestens eines anderen Steckzapfens unterscheidet. Bei einer solchen Wischanlage werden die auftretenden Kräfte und Momente besonders gut und sicher aufgenommen.

In Kombination mit der oben beschriebenen, im Wesentlichen parallel zur Scheibenquererstreckung verlaufenden Ausrichtung, kann eine Wischanlage so ausgestaltet sein, dass sich die Ausrichtungen aller Steckzapfen voneinander unterscheiden. Wesentlich in diesem Falle ist, dass sich die Ausrichtungen unterscheiden, wodurch insbesondere die im Betrieb auftretenden Momente, die zumeist um unterschiedliche Achsen wirken, sicher aufgenommen werden können. Eine solche Wischanlage bleibt im Betrieb sicher verankert.

Dabei ist jene Weiterbildung besonders bevorzugt, bei der die Ausrichtungen im Grunde ein kartesisches System bilden, d.h. dass z.B. die Ausrichtung eines ersten Steckzapfens im Wesentlichen parallel zur Scheibenquererstreckung, die Ausrichtung eines zweiten Steckzapfens im Wesentlichen parallel zur Scheibenlängserstreckung und die Ausrichtung eines dritten Steckzapfens im Wesentlichen senkrecht zur Scheibenebene ausgerichtet sind. Eine derartige Wischanlage hat auch erhebliche Vorteile bei der Montage, da die Befestigungsrichtungen bei manueller Montage für den Monteur und bei automatisierter Montage für den Roboter leicht identifizierbar sind.

In einer Weiterbildung ist hierzu eine interessante Variante genannt, bei der die Ausrichtungen mindestens zweier Steckzapfen zueinander im Wesentlichen parallel und gegensinnig sind. Ist die Ausrichtung des dritten Steckzapfens senkrecht zu den besagten Ausrichtungen, kann eine solche Wischanlage durch eine Drehbewegung um die Achse des dritten Steckzapfens montiert werden.

Nachfolgend werden Ausführungsbeispiele der Erfindung unter Bezugnahme auf die beiliegende Zeichnung im Detail erläutert. In der Zeichnung zeigen:
- Figur 1: eine perspektivische Darstellung einer Scheibenwischanlage mit Befestigungsliedern einer Befestigungsvorrichtung;
- Figur 2: Aufnahmeeinrichtungen der Befestigungsvorrichtung für die Scheibenwischanlage von Figur 1;
- Figur 3: einen Schnitt längs der Linie III-III von Figur 2;
- Figur 4: eine schematisierte Darstellung der Befestigungsrichtungen der Wischanlage der Figuren 1 - 3;
- Figur 5: eine Darstellung ähnlich Figur 4 einer zweiten Möglichkeit der Ausrichtung der Befestigungsrichtungen;
- Figur 6: eine Darstellung ähnlich Figur 4 einer dritten Möglichkeit der Ausrichtung der Befestigungsrichtungen;
- Figur 7: eine Darstellung ähnlich Figur 4 einer vierten Möglichkeit der Ausrichtung der Befestigungsrichtungen;
- Figur 8: eine Darstellung ähnlich Figur 4 einer fünften Möglichkeit der Ausrichtung der Befestigungsrichtungen;
- Figur 9: eine Darstellung ähnlich Figur 4 eier sechsten Möglichkeit der Ausrichtung der Befestigungsrichtungen, wobei, diese Ausführung nicht zur Erfindung gehört,
- Figur 10: eine Darstellung ähnlich Figur 4 einer siebten Möglichkeit der Ausrichtung der Befestigungsrichtungen; und
- Figur 11: eine Darstellung ähnlich Figur 4 einer achten Möglichkeit der Ausrichtung der Befestigungsrichtungen, wobei diese Ausführung nicht zur Erfindung gehört.

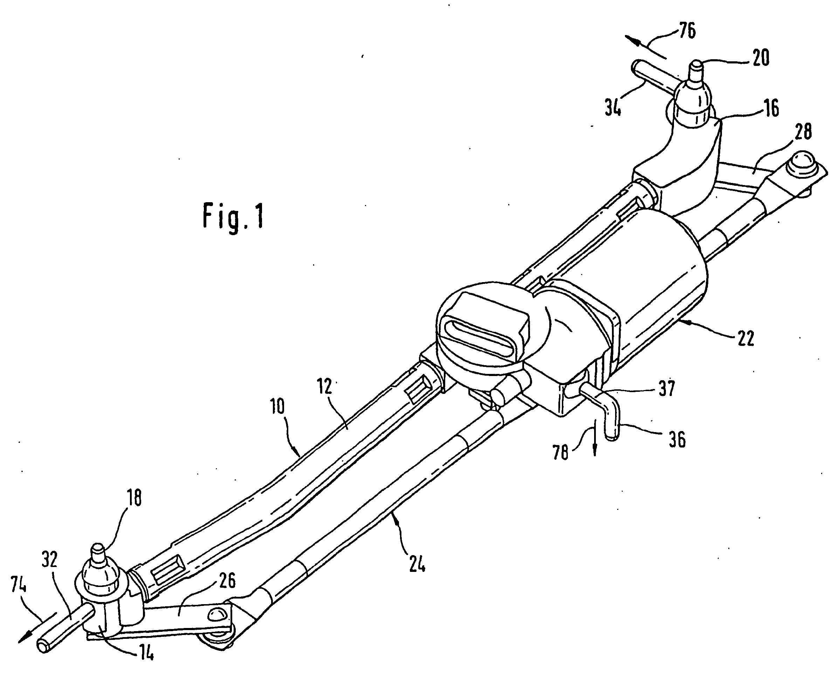

Eine Scheibenwischanlage für ein Kraftfahrzeug trägt in Figur 1 insgesamt das Bezugszeichen 10. Sie umfasst einen stangenartigen Tragkörper 12, der an beiden Enden jeweils einen Lagerkörper 14 bzw. 16 trägt. In jedem Lagerkörper 14 bzw. 16 ist jeweils eine Wischerwelle 18 bzw. 20 zur Aufnahme eines Scheibenwischerarms axial gesichert und verdrehbar gelagert.
Auf dem Tragkörper 12 sitzt ungefähr auf dessen Mittelstück eine Antriebseinrichtung 22, welche auf ein Koppelgestänge 24. arbeitet. Das eine Ende des Koppelgestänges 24 ist mit einer Schwinge 26 gelenkig verbunden, welche wiederum mit der Wischerwelle 18 starr gekoppelt ist. Das andere Ende des Koppelgestänges 24 ist mit einer Schwinge 28 gelenkig verbunden, welche mit der anderen Wischerwelle 20 starr verbunden ist.

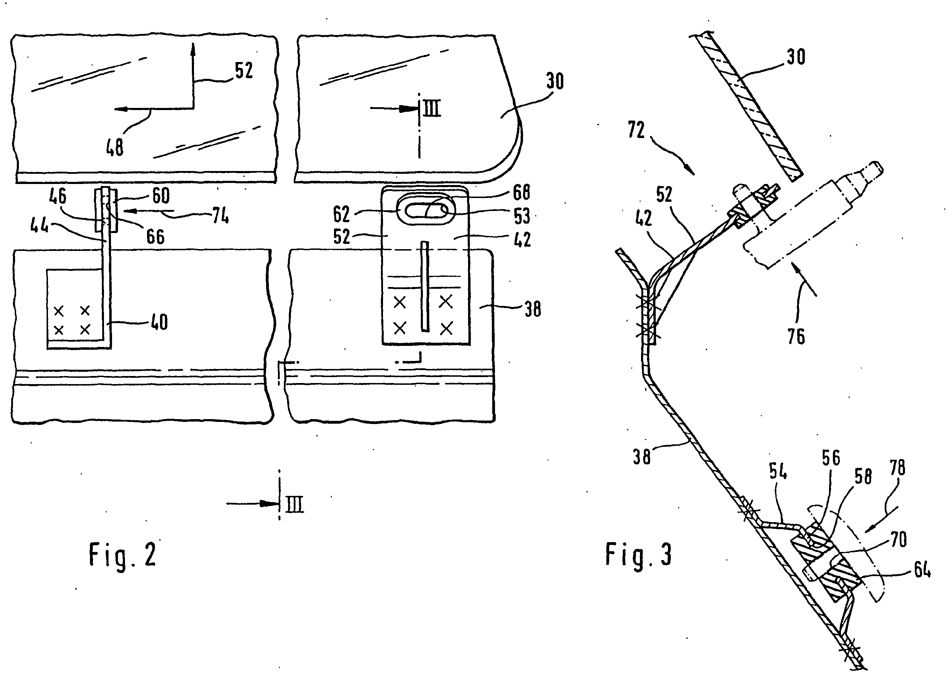

Die Scheibenwischanlage 10 ist mittels einer verschraubungsfreien Steckverbindung unterhalb einer Windschutzscheibe 30 (vergl. Figuren 2 und 3) einer Fahrzeugkarosserie befestigbar. Zu diesem Zweck trägt jeder Lagerkörper 14, 16 einen zylindrischen Steckzapfen 32, 34. Der in Figur 1 linke Steckzapfen 32 ragt in einem rechten Winkel zur Wischerwelle 18 vom Lagerkörper 14 ab und zwar in einer Richtung in etwa parallel zur Längserstreckung des Tragkörpers 12. Der in Figur 1 rechte Steckzapfen 34 ragt in einem rechten Winkel zur Wischerwelle 20 vom Lagerkörper 16 in einer Richtung senkrecht zur Ausrichtung des Steckzapfens 32 ab. Ein weiterer zylindrischer Steckzapfen trägt das Bezugszeichen 36 und ist an einem Distanzelement 37 auf der vom Tragkörper 12 abgewandten Seite der Antriebseinrichtung 22 starr befestigt.

Alle drei Steckzapfen 32, 34 und 36 liegen daher senkrecht zueinander im Sinne eines kartesischen Systems. Insgesamt liegen die Steckzapfen 32, 34 und 36 auf den Eckpunkten eines Dreiecks und bilden eine stabile Abstützbasis.

Wie aus Figur 2 ersichtlich ist, sind auf ein Strukturblech 38 des Kraftfahrzeugs zwei Halteteile 40 und 42 aufgepunktet. Das in Figur 2 linke Halteteil 40 umfasst einen im Wesentlichen senkrecht zum Strukturblech 38 stehenden Befestigungsabschnitt 44, in dem ein kreisförmiges Loch 46 vorhanden ist. Die Ebene des Befestigungsabschnitts 44 ist also senkrecht zur Ebene der Windschutzscheibe 30, und die Normale auf dem Befestigungsabschnitt 44 erstreckt sich parallel zur Scheibenquererstreckung 48.

Das in Figur 2 rechte Halteteil 42 umfasst ebenfalls einen Befestigungsabschnitt 50, der ebenfalls senkrecht zur Ebene der Windschutzscheibe 30 angeordnet ist, dessen Normale jedoch parallel zur Scheibenlängserstreckung 52 ausgerichtet ist. Die Scheibenquererstreckung 48 erstreckt sich in Fahrzeugrichtung gesehen also von einer Seite des Fahrzeugs zur anderen, wohingegen die Scheibenlängserstreckung 52 in Fahrzeugrichtung gesehen von vorn nach hinten verläuft. Im Befestigungsabschnitt 50 ist ein Langloch 53 vorhanden, welches parallel zur Scheibenquerstreckung 48 verläuft.

Ferner ist auf dem Strukturblech 38 des Kraftfahrzeugs ein Halteteil 54 vorgesehen, welcher ebenfalls auf das Strukturblech 38 aufgepunktet ist. Das Halteteil 54 ist im Querschnitt trapezförmig mit einem zum Strukturblech 38 parallelen Befestigungsabschnitt 56. In diesem ist ein Loch 58 vorhanden. Der Befestigungsabschnitt 56 ist insgesamt in etwa parallel zur Ebene der Windschutzscheibe 30.

In das Loch 46 im Befestigungsabschnitt 44 des Halteteils 40, das Loch 51 im Befestigungsabschnitt 50 des Halteteils 42 und in das Loch 58 im Befestigungsabschnitt 56 des Halteteils 54 sind jeweils entsprechende Gummitüllen 60, 62 und 64 eingesetzt, in denen wiederum Aufnahmeöffnungen 66, 68 und 70 vorhanden sind. Der Durchmesser der Aufnahmeöffnung 66, 68 und 70 (die Aufnahmeöffnung 68 ist zum Toleranzausgleich ebenfalls als Langloch ausgebildet) ist so bemessen, dass die Steckzapfen 32, 34 und 36 jeweils im Presssitz in den Aufnahmeöffnungen 66, 68 und 70 aufgenommen sind.

Die Steckzapfen 32, 34 und 36, die Gummitüllen 60, 62 und 64 mit den Aufnahmeöffnungen 66, 68 und 70 bilden insgesamt eine Befestigungsvorrichtung 72 für die Befestigung der Scheibenwischanlage 10 am Kraftfahrzeug (ohne Bezugszeichen). Bei der Montage wird folgendermaßen vorgegangen:
Zunächst wird der Steckzapfen 32 in die Aufnahmeöffnung 66 in der Gummitülle 60 längs der durch den Pfeil 74 dargestellten Befestigungsrichtung eingeführt. Sobald der Steckzapfen 32 vollständig bis zum Anschlag in die Aufnahmeöffnung 66 eingeführt ist, kann der Steckzapfen 34 durch eine Schwenkbewegung der Scheibenwischanlage 10 in die Aufnahmeöffnung 68 in der Gummitülle 62 längs der durch den Pfeil 76 dargestellten Befestigungsrichtung eingeführt werden. Die Drehachse für die Schwenkbewegung liegt dabei im Bereich der Gummitülle 60. Schließlich wird durch eine Kippbewegung der Scheibenwischanlage 10 der Steckzapfen 36 in die Aufnahmeöffnung 70 in der Gummitülle 64 längs der durch den Pfeil 78 dargestellten Befestigungsrichtung eingeführt. Die Kippbewegung erfolgt dabei um eine Achse, welche in etwa durch die Gummitüllen 60 bzw. 62 geht.

Auf diese Weise wird eine einfache verschraubungsfreie Montage der Scheibenwischanlage 10 am Kraftfahrzeug gewährleistet. Durch die kartesisch angeordneten Befestigungsrichtungen 74, 76 und 78 werden sämtliche Momente, die im Betrieb der Scheibenwischanlage 10 auftreten können, sicher aufgenommen.

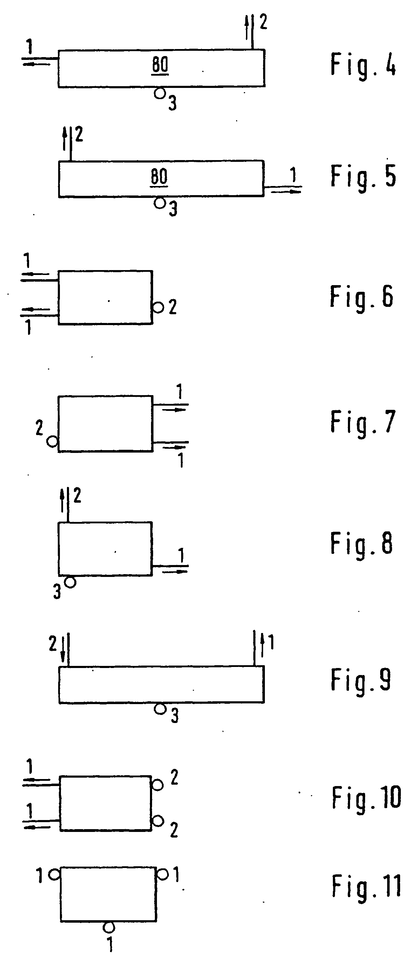

In den Figuren 4 - 11 sind mehrere Ausführungsbeispiele für mögliche Ausrichtungen der Steckzapfen dargestellt. Die jeweilige Befestigungsrichtung wird durch einen Pfeil angezeigt, ein Kreis entspricht einer Befestigungsrichtung senkrecht zur Blattebene. Dazuhin ist für jede Befestigungsstelle durch eine Zahl die Reihenfolge bei der Montage angegeben.

Die in Figur 4 dargestellte Anlage (Tragkörper, Antriebseinrichtung etc. sind nicht im Detail dargestellt; die sie umfassende Einheit trägt insgesamt das Bezugszeichen 80) entspricht dem in den Figuren 1 - 3 dargestellten Ausführungsbeispiel. Die in Figur 5 dargestellte Einheit wird ähnlich wie die in den Figuren 1 - 4 dargestellte Scheibenwischanlage 10 montiert, wobei sie besonders günstig bei einem Fahrzeug mit Rechtslenkung eingesetzt werden kann.

Die in den Figuren 6 - 8 sowie 10 und 11 dargestellten Scheibenwischanlagen 10 bauen besonders kompakt und sind daher für Heckscheibenwischer besonders gut geeignet. Bei der in Figur 9 dargestellten Scheibenwischanlage 10 wiederum erfolgt die Befestigung durch eine Schwenkbewegung um die Achse des Steckzapfens 36.

## Patentansprüche

1. Wischanlage (10) für eine Scheibe (30) eines Kraftfahrzeugs mit mindestens drei voneinander beabstandeten, als Steckzapfen (32, 34, 36) ausgebildeten Befestigungsgliedern, von denen zwei (32, 34) auf einer Verbindungslinie liegen und der dritte (36) von der Verbindungslinie beabstandet ist, welche Steckzapfen verschraubungsfrei in entsprechende Aufnahmeeinrichtungen (66, 68, 70) am Kraftfahrzeug eingreifen können, **dadurch gekennzeichnet, dass** bei am Kraftfahrzeug montierten Zustand der Wischanlage (10) mindestens ein Steckzapfen (32) im Wesentlichen parallel zur Scheibenquererstreckung (48) ausgerichtet ist, wobei unter Scheibenquererstreckung (48) eine Richtung von einer Seite der Scheibe zur anderen, d. h. in Fahrzeugrichtung gesehen von links nach rechts bzw. von rechts nach links, verstanden wird.

2. Wischanlage nach Anspruch 1, **dadurch gekennzeichet, dass** sich die Ausrichtung mindestens eines Steckzapfens (32) von der Ausrichtung mindestens eines anderen Steckzapfens (34, 36) unterscheidet.

3. Wischanlage (10) nach Anspruch 1 oder 2, , **dadurch gekennzeichnet, dass** sich die Ausrichtungen (74, 76, 78) aller Steckzapfen (32, 34, 36) voneinander unterscheiden.

4. Wischanlage nach einem der vorhergehenden Ansprüche, **dadurch gekennzeichnet, dass** die Ausrichtung (74) eines ersten Steckzapfens (32) im Wesentlichen parallel zur Scheibenquererstreckung (48), die Ausrichtung (76) eines zweiten Steckzapfens (34) im Wesentlichen parallel zur Scheibenlängserstreckung (52) und die Ausrichtung (78) eines dritten Steckzapfens (36) im Wesentlichen senkrecht zur Scheibenebene erstreckt, wobei unter Scheibenquererstreckung (48) bei am Kraftfahrzeug montiertem Zustand der Wischanlage (10) eine Richtung von einer Seite der Scheibe zur anderen, d. h. in Fahrzeugrichtung gesehen von links nach rechts bzw. von rechts nach links, verstanden wird und wobei die Scheibenlängserstreckung (52) in Fahrzeugrichtung gesehen von vorn nach hinten verläuft.

5. Wischanlage nach einem der vorhergehenden Ansprüche, **dadurch gekennzeichnet, dass** die Ausrichtungen mindestens zweier Steckzapfen zueinander im Wesentlichen parallel und gegensinnig sind.

## Claims

1. Windscreen wiper module (10) for a screen (30) of a motor vehicle with at least three fixing members at a distance from one another designed as push-fit pins (32, 34, 36), two of which (32, 34) lie on a connecting line and the third (36) is at a distance from the connecting line, which (push-fit pins) are able to mesh without screw fixing in corresponding receiving devices (66, 68, 70) on the vehicle, **characterised in that** in the installed status of the windscreen wiper module (10) on the motor vehicle, at least one push-fit pin (32) is essentially aligned parallel to the transverse plane of the screen (48), with the longitudinal plane of the screen (48) meaning a direction from one side of the screen to the other, i.e. seen in the direction of the vehicle from the left to the right and from the right to the left.

2. Windscreen wiper module according to claim 1, **characterised in that** the alignment of at least one push-fit pin (32) differs from the alignment of at least one other push-fit pin (34, 36).

3. Windscreen wiper module (10) according to claim 1 or 2, **characterised in that** the alignments (74, 76, 78) of all push-fit pins (32, 34, 36) differ from one another.

4. Windscreen wiper module according to one of the above claims, **characterised in that that** alignment (74) of a first push-fit pin (32) extends essentially parallel to the transverse plane of the screen (48), the alignment (76) of a second push-fit pin (34) extends essentially parallel to the longitudinal plane of the screen (52) and the alignment (78) of a third push-fit pin (36) extends essentially vertically to the plane of the screen, with the transverse plane of the screen (48) in the installed status of the windscreen wiper module (10) on the motor vehicle being understood as a direction from one side of the screen to the other, i.e. seen in the direction of the vehicle from the left to the right and from the right to the left and with the longitudinal plane of the screen (52) running from the front to the rear, seen in the direction of the vehicle.

5. Windscreen wiper module according to one of the above claims, **characterised in that** the alignments of at least two push-fit pins in relation to one another are essentially parallel and in the opposite direction to one another.

## Revendications

1. Système d'essuie-glace (10) destiné au pare-brise (30) d'un véhicule automobile, comportant au moins trois éléments de fixation espacés les uns des autres réalisés sous la forme de pivots à douille (32, 34, 36), dont deux (32, 34) se trouvent sur une ligne de jonction et le troisième (36) est à distance de la ligne de jonction, lesquels pivots à douille peuvent s'engager sans vissage dans des dispositifs de réception correspondants (66, 68, 70) présents sur le véhicule, **caractérisé en ce que** lorsque le système d'essuie-glace (10) est monté sur le véhicule, au moins un pivot à douille (32) est orienté sensiblement parallèlement à l'étendue transversale (48) du pare-brise, sachant qu'on entend par étendue transversale (48) du pare-brise une direction allant d'un côté du pare-brise à l'autre, c'est-à-dire de la gauche à la droite et/ou de la droite à la gauche vu dans le sens de la marche du véhicule.

2. Système d'essuie-glace selon la revendication 1, **caractérisé en ce que** l'orientation d'au moins un pivot à douille (32) est différente de l'orientation d'au moins un autre pivot à douille (34, 36).

3. Système d'essuie-glace (10) selon la revendication 1 ou 2, **caractérisé en ce que** les orientations (74, 76, 78) de tous les pivots à douille (32, 34, 36) sont différentes les unes des autres.

4. Système d'essuie-glace selon une des revendication précédentes, **caractérisé en ce que** l'orientation (74) d'un premier pivot à douille (32) s'étend sensiblement parallèlement à l'étendue transversale (48) du pare-brise, l'orientation (76) d'un deuxième pivot à douille (34) s'étend sensiblement parallèlement à l'étendue longitudinale (52) du pare-brise et l'orientation (78) d'un troisième pivot à douille (36) s'étend sensiblement perpendiculairement au plan du pare-brise, sachant qu'on entend par étendue transversale (48) du pare-brise pour un système d'essuie-glace (10) monté sur le véhicule une direction allant d'un côté du pare-brise à l'autre, c'est-à-dire de la gauche à la droite et/ou de la droite à la gauche vu dans le sens de la marche du véhicule, et sachant que l'étendue longitudinale (52) du pare-brise va de l'avant à l'arrière vu dans le sens de la marche du véhicule.

5. Système d'essuie-glace selon une des revendications précédentes, **caractérisé en ce que** les orientations d'au moins deux pivots à douille sont sensiblement parallèles et en sens inverses.
